# NEUE EUROPÄISCHE PATENTSCHRIFT

(11) **EP 1 107 041 B2**
(45) Veröffentlichungstag und Bekanntmachung des Hinweises auf die Entscheidung über den Einspruch: **14.11.2012**
(45) Hinweis auf die Patenterteilung: 18.07.2007
(21) Anmeldenummer: 99890381.9
(22) Anmeldetag: 09.12.1999
(51) Int. Cl.: G02B 27/01

(54) **Maske zum Anzeigen von mit einer Kamera aufgenommenen Bildern**
Mask to display an image taken with a camera
Masque pour afficher une image prise avec une caméra

(30) Priorität: 03.12.1999 EP 99890374
(43) Veröffentlichungstag der Anmeldung: 13.06.2001
(73) Patentinhaber: active photonics AG, Visualisierungs- und Kommunikationssysteme, 9500 Villach (AT)
(72) Erfinder: Del Bianco, Alessandro, 9500 Villach (AT); Paul, Christian, 9500 Villach (AT); Oberwalder, Hermann, 9701 Rothenthurn (AT); Reininger, Franz, 9500 Villach (AT)
(74) Vertreter: Hehenberger, Reinhard

(56) Entgegenhaltungen:
- EP-A- 0 622 030
- EP-A2- 1 046 411
- US-A- 4 703 879
- US-A- 4 786 966
- US-A- 5 949 582
- US-H- H 833
- 'Evaluation of commercially available thermal imaging cameras for navy shipboard firefighting', Februar 1999
- Notizen einer Besprechung bei Lockheed Martin
- Email von Todd Parker von Lockheed Martin
- Notizen einer Besprechung mit Horncastle Electronic Services Ltd.
- Notizen einer Besprechung mit Sony
- Schreiben von Charles Hollywood Ltd.
- Broschüre für die "Harrogate Fire Show", im November 1999
- Innerbetrieblicher Vergleich der Einsprechenden von Produkten der Konkurrenz
- Schriftliche Erklärung unter Eid von Gordon William Slack
- Schriftliche Erklärung unter Eid von Charles James Peter Humpoletz
- Schriftliche Erklärung unter Eid von Arron Stout
- Schriftliche Erklärung unter Eid von James Peter Brooks
- Entwurf einer schriftlichen Erklärung unter Eid von Glen Bull ohne Unterschrift
- 'Collins Concise Dictionary', Bd. 3, ISBN 0004707788

## Beschreibung

Die Erfindung betrifft eine Atemschutzmaske oder einen Helm mit den Merkmalen des Oberbegriffes des Anspruches 1.

Feuerwehrmänner müssen häufig unter sehr schwierigen Bedingungen, wie Dunkelheit oder starker Sichtbehinderung durch Rauch, teilweise mit schwerer Ausrüstung Personen suchen und sich zum Brandherd vorarbeiten, was sehr große Gefahren mit sich bringt. Durch die schwere Atemschutzausrüstung in der Bewegungsfreiheit und Sicht eingeschränkt und durch die starke Rauchentwicklung oder Dunkelheit ist es für den Feuerwehrmann oft nicht möglich, Gefahrenstellen und Hindernisse rechtzeitig zu erkennen. Der Feuerwehrmann ist daher einzig und allein auf seinen Tastsinn angewiesen.

Um dieses Problem zu lösen, wurden in der Vergangenheit schon mehrere Systeme angeboten, die mit Infrarotkameras arbeiten, durch welche der Feuerwehrmann nicht auf sichtbares Licht zum Erkennen der Umgebung angewiesen ist. Insbesondere die Infrarotstrahlung von Menschen und Brandherden läßt sich mit einer Infrarotkamera gut aufnehmen und darstellen.

Aus der US H833 H ist ein Visier mit einer Sehhilfe bekannt, dass auf einem Helm aufgesetzt werden kann. Aus der US-A 4786966 ist ein Videosystem bekannt, das entweder an einem Helm befestigt oder mit Hilfe einer Maske direkt auf das Gesicht geetzt werden kann.

In der US-A 5 949 582 ist eine an einem Helm befestigbare Gesichtsmaske beschrieben, in die eine Infrarotkamera, ein Schirm zum Anzeigen der von der Infrarotkamera aufgenommenen Bilder sowie eine Atemschutzeinrichtung integriert sind. Diese Gesichtsmaske ist zwar insoferne zweckmäßig als es sich um ein kompaktes System handelt, das dem Feuerwehrmann die Hände frei läßt. Ein erheblicher Nachteil dieser Gesichtsmaske ist jedoch, daß sie nicht zum Nachrüsten bestehender Systeme bestehend aus Helmen und/oder Atemschutzmasken mit einem Sichtgerät geeignet ist. Die aus der US-A 5 949 582 bekannte Gesichtsmaske ist des weiteren dadurch nachteilig, als der Atemschutz nicht alleine, d.h. ohne Sichtgerät, eingesetzt werden kann, was die Anschaffungskosten insoferne verteuert als neben der Gesichtsmaske auch Atemschutzeinrichtungen ohne Sichtgerät zur Verfügung gehalten werden müssen.

Der Erfindung liegt daher die Aufgabe zu Grunde, eine Atemschutzmaske oder einen Helm der eingangs genannten Art so weit zu entwickeln, daß damit auch bereits bestehende Ausrüstung mit einem Sichtgerät ausgestattet werden kann.

Gelöst wird diese Aufgabe mit einer Atemschutzmaske oder einen Helm mit den Merkmalen des Anspruches 1.

Der Lösung der gestellten Aufgabe liegt der erfindungsgemäße Gedanke zu Grunde, daß die einfachste und wirtschaftlichste Lösung für das Nachrüsten bestehender Ausrüstung die ist, den Schirm, an dem das von einer Kamera, z.B. einer Infrarotkamera oder einer CCD-Kamera, aufgenommene Bild zu sehen ist, an einer Maske anzuordnen, die einfach auf die bestehende Ausrüstung aufgesetzt wird. Um zu verhindern, daß der Blick auf den Schirm durch Rauch, Ruß oder sonstige Verschmutzung behindert oder eingeschränkt wird, ist erfindungsgemäß des weiteren vorgesehen, die Maske gegenüber der Anlagefläche abzudichten, so daß das Eindringen von Rauch oder Schmutz zuverlässig verhindert wird. Bei einer Vielzahl von vorhandenen Atemschutzmasken oder Helmen ist ohnedies eine Sichtscheibe bzw. ein Visier vorgesehen, welche als Dichtfläche für die Maske besonders geeignet ist.

Um die Maske an möglichst viele vorhandene Atemschutzmasken bzw. Helme anpassen zu können, kann im Rahmen der Erfindung vorgesehen sein, daß die Dichtung austauschbar am Rahmen befestigt ist. Es ist auf diese Weise sehr einfach möglich, eine einheitliche Maske an viele Atemschutzmasken oder Helme mit unterschiedlichen Scheibenkrümmungen anzupassen, in dem man eine geeignet geformte Dichtung an der Maske anbringt, um für eine zuverlässige Dichtung zu sorgen.

In einer bevorzugten Ausführungsform der Erfindung kann vorgesehen sein, daß die Maske über eine Verbindung mit einer Montageeinrichtung zur Befestigung am Helm verbunden ist und insbesondere, daß die Verbindung beweglich ist bzw. daß die Verbindung federelastisch ist.

Diese Ausführungsformen der Erfindung ermöglichen ein einfaches Befestigen der Maske am Helm und des weiteren eine einfache und dichte Befestigung der Maske am Visier des Helmes bzw. der Scheibe einer Atemschutzmaske. Des weiteren erlaubt eine bewegliche Verbindung auch das Hochschwenken der Maske aus dem Sichtbereich, falls dies gewünscht wird.

Des weiteren kann an der Montageeinrichtung die Kamera befestigt sein, so daß ein kompaktes System gegeben ist, das bei Bedarf an einem Helm befestigbar ist.

Alternativ kann auch vorgesehen sein, daß die Montageeinrichtung eine an einen Helm angepaßte Schale umfaßt, in die die Kamera vorzugsweise integriert ist. Diese Ausführungsform bringt den Vorteil mit sich, daß die Kamera gut geschützt in die Schale integriert sein kann, so daß sich die Lebensdauer der Kamera beträchtlich verlängern läßt.

Um die von der Kamera aufgenommenen Bilder auf dem Schirm darzustellen, kommt bevorzugt ein Sichtgerät zum Einsatz wie dies in der EP-A-1 107 040 beschrieben ist.

Mit anderen Worten kann als Schirm der vorliegenden Anmeldung der teilweise transparente Reflektor der EP-A-1 107 040 eingesetzt werden, an dem die Bilder von wenigstens einem in die Maske integrierten Projektor gemäß der EP-A-1 107 040 zu sehen sind.

Weitere bevorzugte Ausführungsformen sind Gegenstand der übrigen Unteransprüche.

Eine bevorzugte Ausführungsform der vorliegenden Erfindung wird unter Bezugnahme auf die beiliegenden Zeichnungen näher beschrieben.

Es zeigen:
- Fig. 1 und 2: eine standardgemäße Ausrüstung eines Feuerwehrmannes bestehend aus einem Helm und einer Atemschutzmaske in Vorder- und Seitenansicht,
- Fig. 3 und 4: eine Maske mit einer Montageeinrichtung und einer Kamera in Vorder- und Seitensicht und
- Fig. 5 und 6: die Anordnung von Fig. 3 im an der Ausrüstung von Fig. 1 und 2 angebrachten Zustand in Vorder- und Seitenansicht.

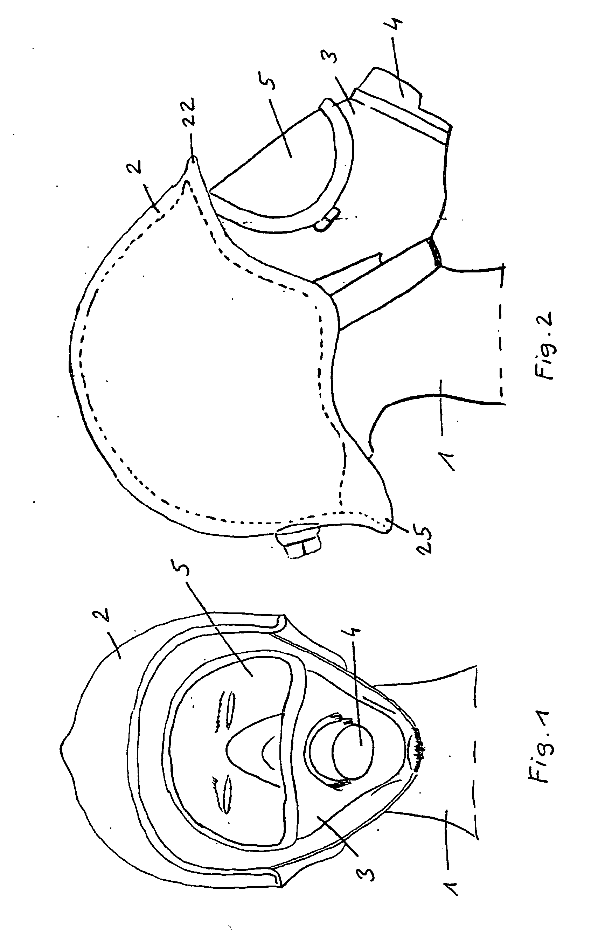

In den Fig. 1 und 2 ist der Kopf 1 eines Feuerwehrmannes dargestellt, der einen Helm 2 mit einer Atemschutzmaske 3 trägt. Die Atemschutzmaske 3 ist mit einem Filter 4 sowie einer Sichtscheibe 5 ausgestattet.

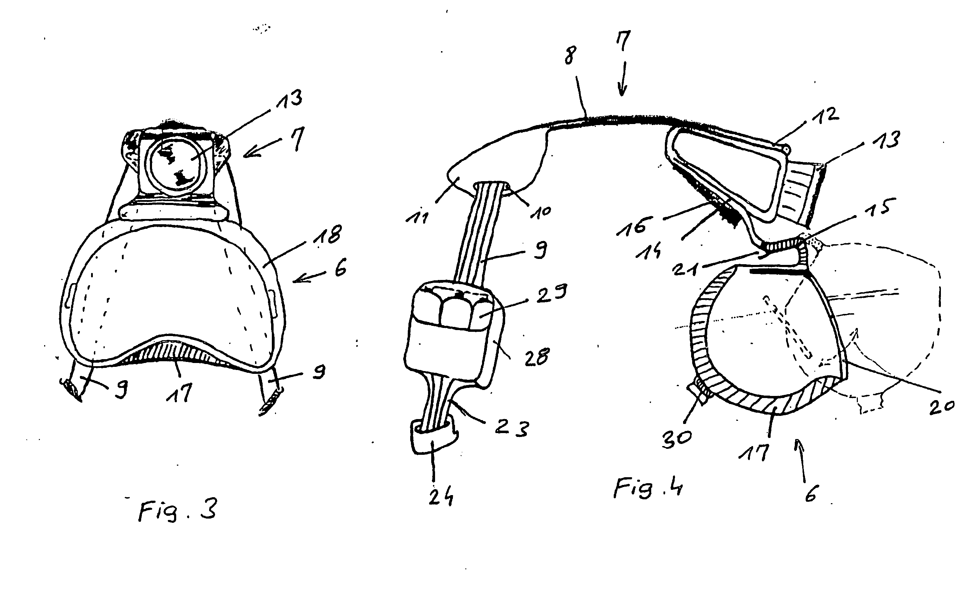

In den Fig. 3 und 4 ist eine Maske 6 dargestellt, die über ein Montagesystem 7 am Helm 2 und in weiterer Folge an der Maske 3 befestigbar ist.

Die Montageeinrichtung 7 besteht im wesentlichen aus einem Hauptgurt 8 sowie einem Verbindungsgurt 9, der durch Öffnungen 10 am hinteren Ende 11 des Hauptgurtes 8 geführt ist. Der Hauptgurt 8 und der Verbindungsgurt 9 sind etwa in Y-Form angeordnet. Der Hauptgurt 8 ist nicht dehnbar, wogegen der Verbindungsgurt 9 gummielastisch ist, um die Montageeinrichtung 7 am Helm 2 festzuspannen. Das vordere Ende 12 des Hauptgurtes 8 ist an der Oberseite einer Infrarotkamera 13 befestigt, die ihrerseits über einen Verbindungsteil 14 und eine bewegliche Verbindung 15 mit der Maske 6 verbunden ist.

Um die Neigung der Kamera 13 zur Horizontalen einstellen zu können, ist an der Unterseite des Verbindungsteiles 14 ein Adapter 16 vorgesehen, über den der Verbindungsteil 14 am Helm 2 anliegt. Durch die Wahl des Keilwinkels des Adapters 16 kann die Neigung der Infrarotkamera 13 zur Horizontalen verändert werden.

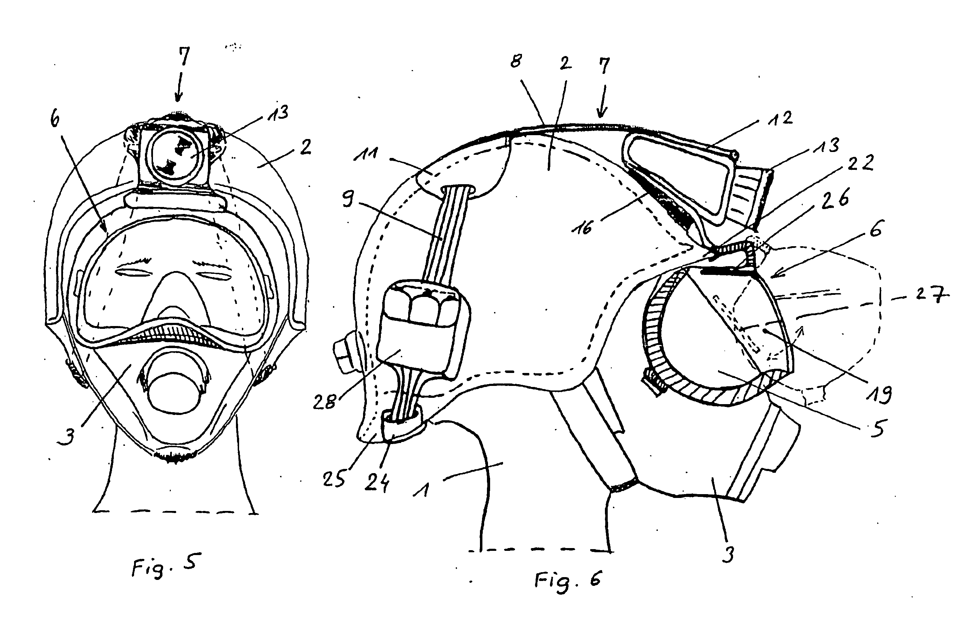

Die bewegliche Verbindung 15 erlaubt es, die Maske 6 zu verschwenken, wie dies durch strichlierte Linien in den Fig. 4 und 6 dargestellt ist. Dies bringt die erheblichen Vorteile mit sich, daß die Maske weitgehend unabhängig von Helmformen und -größen sowie Atemschutzmasken und -größen angepaßt werden kann und die Maske 6 bei Bedarf problemlos nach oben geschwenkt und dadurch die Sicht für den Feuerwehrmann 1 freigegeben werden kann.

Die Verbindung kann, wie in Fig. 4 dargestellt, eine flexible Verbindung sein, aber auch durch andere Formen von Gelenken ersetzt werden. Bevorzugt ist, wenn die Verbindung 15 so ausgeführt ist, daß sie bei nach unten geschwenkter Maske 6 diese fest gegen die Scheibe 5 drückt, um eine Dichtung 17 am Rahmen 18 der Maske dichtend gegen die als Anlagefläche dienende Scheibe 5 zu drücken.

Um den Raum 19 zwischen der Scheibe 20 der Maske 6, dem Rahmen 18, der Dichtung 17 und der Scheibe 5 der Atemschutzmaske 3 zuverlässig abzudichten, kann des weiteren zu beiden Seiten der Maske 6 ein Befestigungsmittel 30 in Form von Haken, elastischen Schlaufen od.dgl. vorgesehen sein, die an der Atemschutzmaske 3 eingehakt bzw. eingehängt werden können.

Um ein einfaches Befestigen der Montageeinrichtung 7 am Helm 2 zu ermöglichen, ist am Verbindungsteil 14 ein Haken 21 angeordnet, der am vorderen Rand 22 des Helmes 2 eingehakt werden kann. Auf ähnliche Weise sind an den Enden 23 des Verbindungsgurtes 9 Befestigungsklammern 24 angeordnet, die beidseits am hinteren Rand 25 des Helmes 2 eingehakt werden können, was so erfolgt, daß der Verbindungsgurt 9 so stark gespannt ist, daß die Montageeinrichtung 7 samt Infrarotkamera 13 und Maske 6 ausreichend fest am Helm 2 befestigt ist. Anstelle des elastischen Verbindungsgurtes 9 kann natürlich auch eine andere Form eines längenveränderbaren Gurtes vorgesehen sein, mit dem die Montageeinrichtung 7 am Helm 2 festgezurrt werden kann.

Wie bereits erwähnt ist es bevorzugt, wenn in die Maske 6 ein Sichtgerät integriert ist, wie dies in der EP-A-1 107 040 beschrieben ist. Es wird lediglich kurz erläutert, daß in der in den Fig. 4 und 6 dargestellten Ausführungsform zwei Projektoren 26 im Bereich des oberen Randes der Maske 6 angeordnet sind, daß die Scheibe 20 die Reflexionsfläche bildet, und daß im Strahlengang zwischen dem Projektor 26, der Reflexionsfläche 20 und den Augen des Feuerwehrmannes ein halbtransparenter Spiegel 27 liegt.

Wie in den Fig. 4 und 6 zu sehen ist, ist an einer Seite des Verbindungsgurtes 9 ein Gehäuse 28 für Batterien 29 für die Infrarotkamera 13 und den Projektor 26 vorgesehen.

Nicht dargestellt in den Zeichnungen ist ein Sende- und Empfangssystem für Daten, die z.B. über Funk übermittelt werden, um dem Feuerwehrmann auf diese Weise Informationen wie Baupläne oder andere besondere Hindernisse zukommen zu lassen. Des weiteren ist es auch möglich, einer Einsatzzentrale mit dem Sender die von der Infrarotkamera aufgenommenen Bilder und andere Daten, wie Drücke, Temperaturen od.dgl., zu übermitteln, welche Daten selbstverständlich auch dem Feuerwehrmann 1 über das Sichtgerät in der Maske 6 angezeigt werden können.

Schließlich wird noch darauf hingewiesen, daß es bei der vorliegenden Erfindung zwar bevorzugt ist, wenn in die Maske ein Sichtgerät gemäß der EP-A-1 107 040 integriert ist, daß aber auch jede andere Art der Darstellung von über eine Kamera aufgenommene Bilder, wie sie aus dem Stand der Technik bekannt sind, eingesetzt werden können.

Schließlich wird auch noch bemerkt, daß die Maske nicht nur für den Einsatz bei Feuerwehrmännern besonders gut geeignet ist, sondern auch für viele andere Zwecke, wie z.B. bei Motorradhelmen, in der Sicherheitstechnik, im Grenzschutz, beim Tauchen und dgl. verwendet werden kann.

## Patentansprüche

1. Atemschutzmaske oder Helm mit einer Anlagefläche (5) und mit einer Maske (6) mit einem Rahmen (18), an dem eine Dichtung (17) angeordnet ist, wobei die Dichtung (17) der Maske (6) an der Anlagefläche (5) anliegt, so daß zwischen der Maske (6) und der Anlagefläche (5) ein abgeschlossener Raum (19) gebildet wird, in dem ein Schirm (20) zum Anzeigen von mit einer Kamera aufgenommenen Bildern angeordnet ist, **dadurch gekennzeichnet, daß** die Anlagefläche (5) eine Scheibe der Atemschutzmaske (3) oder des Helmes ist.

2. Helm nach Anspruch 1, **dadurch gekennzeichnet, daß** die Maske (6) über eine Verbindung (15) mit einer Montageeinrichtung (7) zur Befestigung am Helm (2) verbunden ist.

3. Helm nach Anspruch 2, **dadurch gekennzeichnet, daß** die Verbindung (15) beweglich ist.

4. Helm nach Anspruch 3, **dadurch gekennzeichnet, daß** die Verbindung (15) federelastisch ist.

5. Helm nach einem der Ansprüche 2 bis 4, **dadurch gekennzeichnet, daß** die Montageeinrichtung (7) über wenigstens ein elastisches oder längenveränderbares Mittel (9) am Helm (2) festspannbar ist.

6. Helm nach einem der Ansprüche 2 bis 5, **dadurch gekennzeichnet, daß** die Montageeinrichtung (7) im wesentlichen Y-förmig ausgeführt und über Haken (21, 24) am Rand (22, 25) des Helmes (2) einhängbar ist.

7. Helm nach einem der Ansprüche 2 bis 5, **dadurch gekennzeichnet, daß** die Montageeinrichtung (7) eine an den Helm (2) angepaßte Schale umfaßt, in die eine Kamera (13) integriert ist.

8. Helm nach einem der Ansprüche 2 bis 7, **dadurch gekennzeichnet, daß** die Kamera (13) an der Montageeinrichtung (7) befestigt ist.

9. Atemschutzmaske oder Helm nach einem der Ansprüche 1 bis 8, **dadurch gekennzeichnet, daß** die Maske (6) über Befestigungsmittel (30) an der Atemschutzmaske (3) oder am Helm befestigbar ist.

10. Atemschutzmaske oder Helm nach einem der Ansprüche 1 bis 9, **dadurch gekennzeichnet, daß** der Schirm (20) teilweise transparent ist.

11. Atemschutzmaske oder Helm nach einem der Ansprüche 1 bis 10, **dadurch gekennzeichnet, daß** die Dichtung (17) austauschbar am Rahmen (18) befestigt ist.

## Claims

1. Breathing mask or helmet with a bearing surface (5) and with a mask (6), having a frame (18) on which a seal (17) is disposed, the seal (17) of the mask (6) abutting on the bearing surface (5) so that, between the mask (6) and the bearing surface (5), a sealed space (19) is formed, in which a screen (20) for displaying pictures taken with a camera is disposed, **characterised in that** the bearing surface (5) is a visor of the breathing mask (3) or of the helmet.

2. Helmet according to claim 1, **characterised in that** the mask (6) is connected via a connection (15) to a mounting device (7) for attaching to the helmet (2).

3. Helmet according to claim 2, **characterised in that** the connection (15) is moveable.

4. Helmet according to claim 3, **characterised in that** the connection (15) is resilient.

5. Helmet according to one of the claims 2 to 4, **characterised in that** the mounting device (7) can be tightened via at least one elastic or longitudinally variable means (9) on the helmet (2).

6. Helmet according to one of the claims 2 to 5, **characterised in that** the mounting device (7) has a substantially Y-shaped configuration and can be suspended on the edge (22, 25) of the helmet (2) via hooks (21, 24).

7. Helmet according to one of the claims 2 to 5, **characterised in that** the mounting device (7) includes a shell which is adapted to the helmet (2) and into which a camera (13) is integrated.

8. Helmet according to one of the claims 2 to 7, **characterised in that** the camera (13) is attached to the mounting device (7).

9. Breathing mask or helmet according to one of the claims 1 to 8, **characterised in that** the mask (6) can be attached to the breathing mask (3) or to the helmet via attachment means (30).

10. Breathing mask or helmet according to one of the claims 1 to 9, **characterised in that** the screen (20) is partially transparent.

11. Breathing mask or helmet according to one of the claims 1 to 10, **characterised in that** the seal (17) is attached to the frame (18) in an exchangeable manner.

## Revendications

1. Masque respiratoire, ou casque avec une surface d'appui (5) et un masque (6), avec un cadre (18) sur lequel est disposé un joint (17), ledit joint (17) du masque (6) épousant ladite surface d'appui (5), de telle sorte qu'un espace fermé (19) est constitué entre le masque (6) et la surface d'appui (5), espace dans lequel est disposé un écran (20) destiné à l'affichage d'images enregistrées par une caméra, **caractérisé en ce que** la surface d'appui (5) est une vitre du masque respiratoire (3) ou du casque.

2. Casque selon la revendication 1, **caractérisé en ce que** le masque (6) est relié à un dispositif de montage (7) par l'intermédiaire d'une liaison (15) en vue de la fixation sur le casque (2).

3. Casque selon la revendication 2, **caractérisé en ce que** la liaison (15) est mobile.

4. Casque selon la revendication 3, **caractérisé en ce que** la liaison (15) est élastique.

5. Casque selon l'une quelconque des revendications 2 à 4, **caractérisé en ce que** le dispositif de montage (7) peut être fixé sur le casque (2) à l'aide d'un moyen élastique ou à longueur variable (9) au moins.

6. Casque selon l'une quelconque des revendications 2 à 5, **caractérisé en ce que** le dispositif de montage (7) a essentiellement la forme d'un Y et qu'il peut être suspendu à l'aide de crochets (21, 24) sur le bord (22, 25) dudit casque (2).

7. Casque selon l'une quelconque des revendications 2 à 5, **caractérisé en ce que** le dispositif de montage (7) comprend une cuvette adaptée au casque (2) et dans laquelle est intégrée une caméra (13).

8. Casque selon l'une quelconque des revendications 2 à 7, **caractérisé en ce que** la caméra (13) est fixée sur le dispositif de montage (7).

9. Masque respiratoire ou casque selon l'une quelconque des revendications 1 à 8, **caractérisé en ce que** le masque (6) peut être fixé à l'aide de moyens de fixation (30) sur le masque respiratoire (3) ou sur le casque.

10. Masque respiratoire ou casque selon l'une quelconque des revendications 1 à 9, **caractérisé en ce que** l'écran (20) est partiellement transparent.

11. Masque respiratoire ou casque selon l'une quelconque des revendications 1 à 10, **caractérisé en ce que** le joint (17) est fixé de manière amovible sur le cadre (18).
